# EUROPEAN PATENT SPECIFICATION

(11) **EP 0 297 810 B1**
(45) Date of publication and mention of the grant of the patent: **18.08.1993**
(21) Application number: 88305834.9
(22) Date of filing: 24.06.1988
(51) Int. Cl.: B65D 81/26, B65D 81/38, B65D 6/18, B29D 24/00, B29C 53/06, B29C 49/00

(54) **Improvements in and relating to boxes for the transportation of fresh fish and meat**
Transportbehälter für Frischfisch und Fleisch
Récipients pour le transport de poissons frais et de viande

(30) Priority: 30.06.1987 NO 872726
(43) Date of publication of application: 04.01.1989
(73) Proprietor: NORSK HYDRO A/S, 0257 Oslo 2 (NO)
(72) Inventor: Gronnevik, Oddbjorn, N-1360 Nesbru (NO)
(74) Representative: Allen, Oliver John Richard

(56) References cited:
- WO-A-86/07036
- DE-A- 2 329 313
- FR-A- 2 564 807
- US-A- 2 144 318
- US-A- 3 795 265

## Description

The present invention relates to boxes for transporting goods such as fresh fish and meat, medicines etc., the boxes having a double side, top and bottom walls of thermoplastic material, the hollow space between the walls being filled with air or some other gas. Drainage is provided for liquid, such as icewater and/or juices from the goods. The invention also relates to a method for producing a flat hollow moulding for the box.

WO 86/07036 discloses a package in which a first and second container portion are coupled together to define a space therebetween for receiving liquid which can seep from the contents of the package.

US 3795265 discloses a container with a hollow walled part that has a resilient inner wall for protectively supporting an article and a rigid outer wall also protecting the article.

Particularly within the biomarine field there is an increase in the transportation of fish and shellfish as fresh food to consumers. This requires the fish or shellfish to be covered with ice and transported in isolated boxes, the so-called "thermo" boxes to destinations at home or abroad.

The most common boxes used for such transport today, are made of foam plastic, for instance polystyrene. Although the thermal isolation ability for such boxes is good, the quality in other aspects is poor. Thus, the constructional properties are poor and they often break when stacked or carried, and consequently damage the content which results in economic loss.

The foamed plastic boxes also have the disadvantage of having to have holes at the sides of the bottom in order to drain liquids such as melted ice and blood exuding from the fish. However, the holes do not solve the undesirable problem of pollution of the environments e.g. in stock and transport rooms. As regards air transport, there is a definite demand for goods packed in waterproof containers, i.e. the base portion should be provided with additional material having high absorption capacity. This extra packing increases the transportation costs as the transportation capacity is reduced (due to the augmented volume) and repacking of the foam plastic containers is necessary.

In addition, the holes in the foam plastic containers contributed to a reduction of the isolation ability as air intrudes through the holes and circulates in the containers.

According to regulations of various national authorities, packing provided for the transportation of fresh food such as fish and meat can be used only once. An essential part of the disposable packing used for such transport, will promptly be destroyed. Regarding the foam plastic containers they represent a special environmental problem as toxic dioxide is produced during combustion. For the recipient of the delivered goods there is a problem of getting rid of the waste packing. It also ought to be mentioned that the users of the foam plastic boxes are charged additionally for transport of empty packing as boxes of this type are quite voluminous.

Another type of "thermo" plastic box is disclosed in German Publication No. 2.226 970 but this is presumably not commercially used. The box described in the said German publication includes an inflatable, doublewall foil construction of a synthetic substance, for instance reinforced polyamide polyethylene, whereby a perforated sheet allowing drainage of waste water is provided on the base. In an effort to solve the stacking problem, the boxes are filled with a gaseous medium. It is, however, quite apparent that the boxes will not be very useful when piled. If one of the lowest boxes of the pile is punctured, which is not unlikely as trucks are often used, the whole pile will fall together. Concerning the drainage sheet in the base part of the box, this might fulfill its purpose as long as the box is not moved. Once the box gets into motion or into an oblique position, undesirable flow of liquids will touch the food and contaminate it.

The object of the present invention is to solve the above mentioned problems and provides a "thermo" box for the transportation of fresh food, particularly fish and meat, which is not encumbered with the above disadvantages.

A "thermo" box in accordance with the invention comprises a double sidewall cover and base construction of thermo plastic material, the hollow space in the base portion, defining the bottom of the box, the sidewalls and the cover being filled with air or other gas, the base portion being provided with drainage for liquid, such as ice water or blood exuded from the fresh food, characterised in that the box is formed of an essentially flat hollow moulding comprising a rectangular base portion and side portions, and a cover portion which is integrally joined to, and extends outwardly from, the base portion, whereby the box is made by folding the sidewalls along score lines of weakness and joined at the corners by means of welding.

Such a box in accordance with the invention:-
- has isolating properties which may be equal to those of the foam plastic boxes,
- has improved constructional properties,
- is cheap to produce,
- has reduced transportation costs by avoiding repacking when sent by air,
- further, the drainage water is trapped without touching the goods,
- reduced costs for the transportation of empty boxes can be achieved and,
- destruction problems are mitigated by regranulating the boxes for re-use.

The invention also comprises an advantageous method for the production of a hollow moulding and also advantageous constructional features of the box itself.

The invention will now be further described with reference to the accompanying drawings, in which:-
Fig. 1 is a longitudinal section of a "thermo" box comprising a top section according to the invention,
Fig. 2 is an enlarged part of the longitudinal section,
Fig. 3 is an enlarged fragmentary cross sectional view of the "thermo" box along the line A-A in Fig. 1,
Fig. 4 is a perspective view of the hollow moulding,
Fig. 5 is an enlarged longitudinal view of the hollow moulding along the line B-B in Fig. 4, and
Fig. 6 shows schematically the method of producing of the hollow moulding principally.

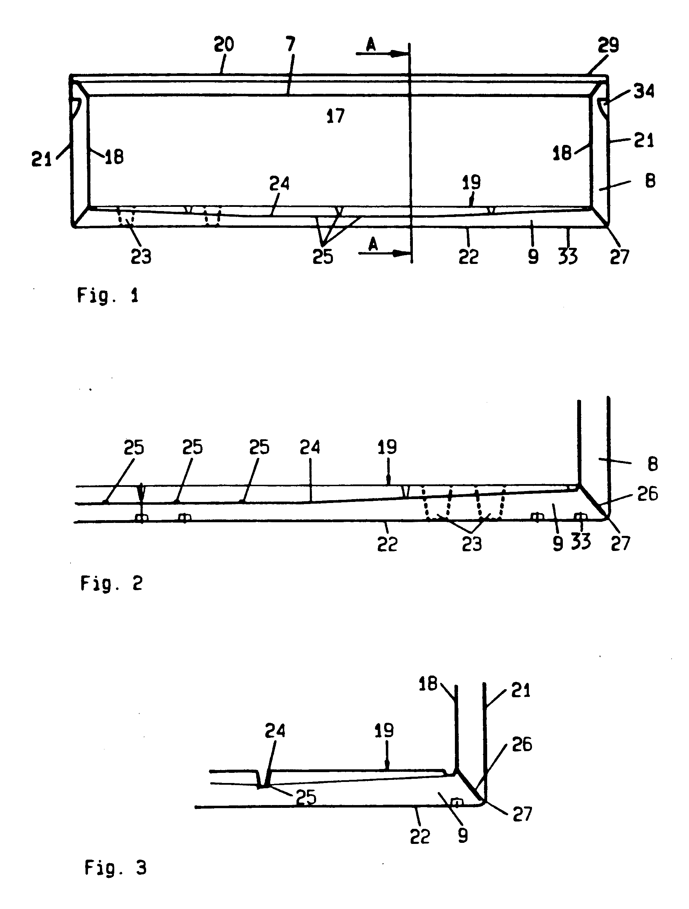

The "thermo" box consists of a hollow doublesided wall, top and base construction including inner sidewalls/sheets 17, 18, 19 and outer sidewalls/sheets 20, 21, 22 and as it appears from Fig 1 - 3.

The "thermo" box is produced of HDPE (High Density Poly Ethylene) or similar "thermo" plastic material. The inner and outer sheets of each wall are kept apart by means of distance members 23, formed during the production of the hollow moulding 2, cfr. subsequent section. The distance sleeves strengthen the general construction of the "thermo" box supporting the sturdyness and mechanical strength. The number of distance sleeves depend on the dimension of the inner and outer sheets, material utilized and the load (for instance when stored).

The inner base sheet 19 including drainage channels 24. In the example illustrated in Fig. 1 - 4 the drainage channels run lengthwise. However, the drainage channels can equally run crosswise or be starformed, i.e. all channels leading towards the centre of the box. Furthermore, in the bottom of the channels 24 and towards the center are arranged drainage holes 25. Drainage water like icewater and blood, exuded from the moist goods flowing to the base portion, are transported via the channels 24, through the drainage holes 25 and into the hollow space 9 of the doublebase of the box where it is trapped. Besides, there is a connection between the hollow space in the base portion and the hollow space 8 in the sidewalls formed as holes 26 or the like, permitting the drainage water in the hollow space 9 in the base portion to flow to the hollow space 8 in the sidewall having the lowest level when the boxes are tilted. The described arrangement minimises the pollution problem and inhibits drainage water from coming into contact with the goods. However, it is possible to add/inject an antiseptic to the hollow space 9 to reduce, or prevent the bacterial growth in the excuded liquids.

"Thermo" boxes of the invention then displays essential advantages concerning drainage and trapping of fluids compared to previously known "thermo" boxes.

Among other distinctive features, there are nipples or knobs 29 provided on the top of the cover and recesses 30 on the bottom of the base portion. The knobs 29 fit into the recesses 30 permitting a relative upper box to be stacked with other similar boxes. The "thermo" box is also provided with recesses or hollows 34 at each extremity which may serve as handles.

The production of a box in accordance with the invention will now be described.

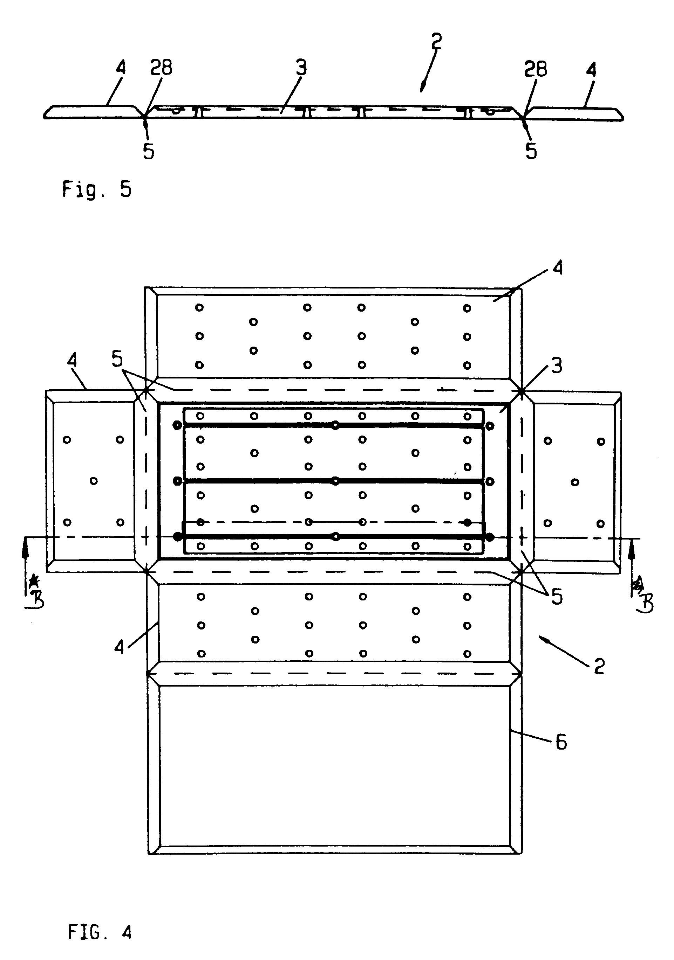

Referring to Fig. 4 and 5 the shape of the "thermo" box is based on a flat hollow moulding 2. The hollow moulding 2 comprises a rectangular base portion 3 defining the bottom of the box, side portions 4 and a cover portion 6, attached to and extending outwardly from respectively the sides of the base portion 3. As shown in Fig. 4 the cover 6 is integrally joined to the hollow moulding 2. However, the cover 6 may also be made of a separate hollow moulding.

The box is shaped by folding upwardly the side portions along lines of weakness or score lines 5 and thereafter joining the side portions by welding at the corners. The lines 5 are formed by the fact that the hollow moulding, on the side which comprises the inner sheet of the box, is provided with V-shaped grooves or notches 28, which after being folded, i.e. after the shaping of the box, extend into the hollow space 8, 9 as protruding ribs 27.

The shaping or folding up of the box can be accomplished in a fully automatic operation by means of suitable equipment not described herein.

The equipment used for the shaping of the box, can with advantage, be situated at the place of application. There is thus obtained an essential reduction of the transportation costs for the box as it can be transported as flat hollow moulding instead of finished boxes which are more voluminous, cfr. above section regarding the foam plastic boxes.

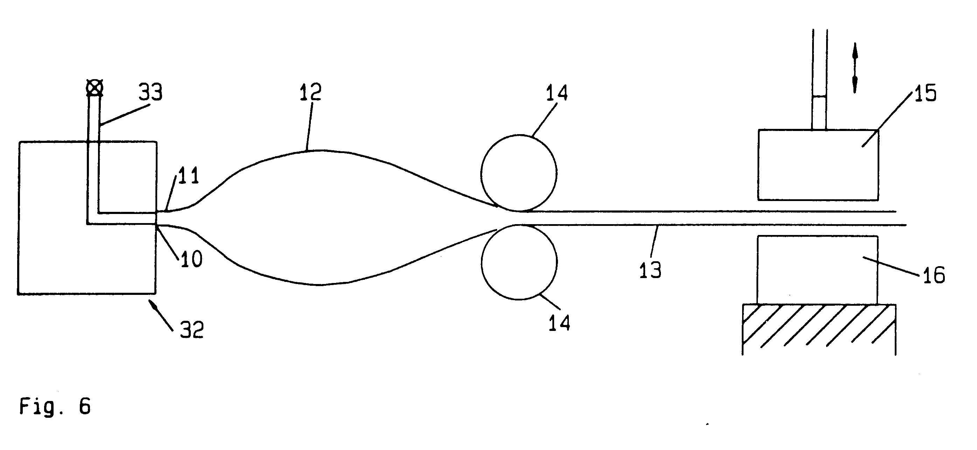

Fig. 6 illustrates, schematically, a principal method of producing the hollow moulding.

The production equipment comprises an extrusion unit 32, supply lines 33 for compressed air, rolls 14 and dies 15, 16. The plastic pulp, of which the hollow moulding is made, is extruded through a ring shaped nozzle 10 in the extruding unit 32. The hose 11 is immediately inflated to a larger dimension 12 by means of the compressed air supplied through the nozzle via the pipes 33.

The inflated hose 12 is further transported between the rolls 14 and are partially pressed to a flattened "hose" 13. The flattened hose 13 is subsequently transported between the dies 15, 16 and is pressed therebetween to form the final shape of the hollow moulding 2. The dies 15, 16 are supplied with cooling, welding and cutting equipment (not shown).

During the process of forming the hollow moulding 2 the upper and lower wall of the flattened hose 13, due to the inner pressure, are respectively pressed against the shaped walls in the upper 15 and lower 16 portions of the dies. At the same time the rims/lips surrounding the hollow moulding 2 are welded and the outwardly extending material is cut off. The production of the hollow moulding 2 is thus obtained in one operation without any need for further treatment.

## Claims

1. A "thermo" box for the transportation of fresh food such as fish, meat, medicines etc., comprising a double sidewall cover and base construction of thermo plastic material, the hollow space in the base portion, defining the bottom of the box, the sidewalls and the cover being filled with air or other gas, the base portion being provided with drainage for liquid, such as ice water or blood exuded from the fresh food, characterised in that the box is formed of an essentially flat hollow moulding (2) comprising a rectangular base portion (3) and side portions (11), and a cover portion (6) which is integrally joined to, and extends outwardly from, the base portion (3), whereby the box is made by folding the sidewalls (4) along score lines of weakness (5) and joined at the corners by means of welding.

2. A "thermo" box according to Claim 1, characterised in that the lines of weakness (5) are created by providing the hollow moulding, on the side which constitutes the inner wall of the box, with V-shaped grooves or notches (28) which after the folding, i.e. after the shaping of the box, protrude into the hollow space as ribs (27).

3. A "thermo" box according to Claim 1 or 2, characterised in that the inner walls (17,18,19) and outer walls (20,21,22) of the sidewalls (4) cover (6) and base portion (3) of the box are kept apart from one another by means of distance members (23).

4. A "thermo" box according to any of the preceding claims characterised in that the inner base wall (19) is provided with longitudinally and/or transversely disposed grooves or drainage channels (24) and in that the bottom of the channels (24), preferably at the centre of the inner wall (19), is provided with holes (25) permitting ice water and/or liquid exuded from the moist goods flowing to the bottom of the channels (24) to be transported through the holes (25) and into the hollow space (9) in the bottom (3).

5. A "thermo" box according to Claim 4, characterised in that the holes (25) are provided with inwardly extending rims.

6. A "thermo" box according to any of the preceding claims, characterised in that the hollow spaces of the base portion and the sidewalls are connected by holes (26) or the like, so that when the box it tilted to the side, trapped drainage water will flow to the sidewall(s).

7. A method for producing a "thermo" box according to any of the previous claims, wherein the box is made by folding an essentially flat hollow moulding made of a thermo plastic material to shape, characterised in that the hollow moulding (2) is produced as a form of blast moulding, wherein the plastic of which the hollow moulding is made is extruded through a ringshaped nozzle (10) to form a hose (11) which is immediately inflated by means of compressed air according to the dimension of the final product and in that the inflated hose is then formed for example by being pressed between two rolls (14) to a flat, hollow object (13) which finally is transported between two dies (15,16) which are designed to produce the correct shape of the hollow moulding and eventually cut off superfluous material surrounding the edges of the hollow moulding after this has reached its final shape.

## Patentansprüche

1. "Thermo"schachtel zum Transportieren von frischen Nahrungsmitteln, wie Fisch, Fleisch, Medikamenten usw., die eine Konstruktion mit doppelter Seitenwand, Deckel und Boden aus Kunststoffmaterial umfasst, wobei der Hohlraum in dem unteren Teil den Boden der Schachtel definiert, die Seitenwände und der Deckel mit Luft oder anderem Gas gefüllt sind, der untere Teil mit einem Ableitungsmittel für Flüssigkeit, wie Eiswasser oder Blut, das sich von den frischen Nahrungsmitteln absondert, vorgesehen ist, dadurch gekennzeichnet, dass die Schachtel aus einem im wesentlichen flachen hohlen Formteil (2) gebildet ist, das ein rechteckiges unteres Teil (3) und Seitenteile (11) umfasst, und ein Deckelteil (6), das mit dem unteren Teil (3) integral verbunden ist und sich nach aussen davon erstreckt, wobei die Schachtel hergestellt wird, indem die Seitenwände (4) entlang Schwächelinien (5) gefaltet werden, und an den Ecken durch Schweissen verbunden werden.

2. "Thermo"schachtel nach Anspruch 1, dadurch gekennzeichnet, dass die Schwächelinien (5) erzeugt werden, indem das hohle Formteil auf der Seite, die die innere Wand der Schachtel bildet, mit V-förmigen Nuten oder Kerben (28) vorgesehen wird, die nach dem Falten, d.h., nach dem Formen der Schachtel, in den Hohlraum als Rippen (27) hineinragen.

3. "Thermo"schachtel nach Anspruch 1 oder 2, dadurch gekennzeichnet, dass die inneren Wände (17,18,19) und die äusseren Wände (20,21,22) der Seitenwände (4), des Deckels (6), und des unteren Teils (3) der Schachtel durch Abstandsglieder (23) voneinander entfernt gehalten werden.

4. "Thermo"schachtel nach einem der vorhergehenden Ansprüche, dadurch gekennzeichnet, dass die innere untere Wand (19) mit längs und quer angeordneten Nuten oder Ableitungskanälen (24) vorgesehen ist, und dass der Boden der Kanäle (24) vorzugsweise in der Mitte der inneren Wand (19) mit Löchern (25) vorgesehen ist, die gestatten, dass Eiswasser und/oder Flüssigkeit, die sich von den feuchten Waren absondert, zu dem Boden der Kanäle (24) fliesst, um durch die Löcher (25) und in den Hohlraum (9) in dem Boden (3) transportiert zu werden.

5. "Thermo"schachtel nach Anspruch 4, dadurch gekennzeichnet, dass die Löcher (25) mit sich nach innen erstreckenden Kanten vorgesehen sind.

6. "Thermo"schachtel nach einem der vorhergehenden Ansprüche, dadurch gekennzeichnet, dass die Hohlräume des unteren Teils und der Seitenwände durch Löcher (26) oder dergleichen verbunden sind, so dass eingeschlossenes Ableitungswasser zu der (den) Seitenwänd(en) fliesst, wenn die Schachtel zur Seite gekippt wird.

7. Verfahren zur Herstellung einer "Thermo"schachtel nach einem der vorhergehenden Ansprüche, in dem die Schachtel hergestellt wird, indem ein im wesentlichen flaches, hohles Formteil aus einem Kunststoffmaterial zur Gestaltung gefaltet wird, dadurch gekennzeichnet, dass das hohle Formteil (2) als eine Art Blasformteil hergestellt wird, in der der Kunststoff, aus dem das hohle Formteil hergestellt ist, durch eine ringförmige Düse (10) stranggezogen wird, um einen Schlauch (11) zu bilden, der sofort durch Druckluft zu den Dimensionen des Endproduktes aufgeblasen wird, und dass der aufgeblasene Schlauch dann geformt wird, indem er zum Beispiel zwischen zwei Walzen (114) in einen flachen, hohlen Gegenstand (13) gepresst wird, der schliesslich zwischen zwei Stempeln (15,16) transportiert wird, die so gestaltet sind, um die richtige Form des hohlen Formteils herzustellen, und schliesslich überflüssiges Material, das die Kanten des hohlen Formteils umgibt, nachdem dieses seine Endgestalt erreicht hat, abzuschneiden.

## Revendications

1. Caisson "thermo" pour le transport de denrées fraîches telles que poisson, viande, médicaments, etc.. comportant une construction à capot et base en double paroi latérale de matière thermoplastique, le vide d'élément de base définissant le fond, les parois latérales et le capot étant rempli d'air ou d'un autre gaz, l'élément de base prévoyant le drainage de liquide, telle que l'eau glacée ou le sang exsudés des denrées fraîches, **caractérisé en ce que** le caisson consiste d'un moulage creux essentiellement plat (2) comportant un élément rectangulaire de base (3) et des éléments latéraux (11), et un élément de capot (6) à raccord intégral allongé vers l'extérieur de l'élément de base (3), ledit caisson étant élaboré en pliant les parois latérales (4) le long de lignes de rayures de faiblesse (5) les coins étant raccordés par soudure.

2. Caisson "thermo" selon la revendication 1, **caractérisé en ce que** les lignes de faiblesse (5) sont créées dans le moulage creux en assurant sur le côté formant la paroi intérieure du caisson une série d'encoches ou de rainures en Vé (28) lesquelles suite au pliage, c.à.d. le façonnage du caisson, font saillie sous forme de nervures (27) dans le vide creux.

3. Caisson "thermo" selon la revendication 1 ou 2, **caractérisé en ce que** les parois intérieures (17,18,19) et les parois extérieures (20,21,22) de parois latérales (4), capot (6) et base (3) du caisson sont tenues écartées l'une de l'autre par des entretoises (23).

4. Caisson "thermo" selon l'une ou l'autre des revendications précédentes **caractérisé en ce que** la paroi intérieure de fond (19) prévoit des rainures ou rigoles de drainage (24) disposées en sens longitudinal et/ou transversal et en ce que le fond des rigoles (24), de préférence au centre de la paroi intérieure (19) prévoit des trous (25) permettant à l'eau glacée et/ou au liquide exsudé par les denrées humides écoulés au fond des rigoles (24) d'être évacués par les trous (25) dans le vide creux (9) situé au fond (3).

5. Caisson "thermo" selon la revendication 4, **caractérisé en ce que** les trous prévoient des bords allongés vers l'intérieur.

6. Caisson "thermo" selon l'une ou l'autre des revendications précédentes, **caractérisé en ce que** les vides creux d'élément de fond et de parois latérales sont raccordés par des trous (26) ou (autres), de telle façon que lorsque le caisson est penché sur le côté, l'eau de drainage ainsi retenue s'écoule vers la/les paroi(s) latérale(s).

7. Procédé d'élaboration de caisson thermo suivant l'une ou l'autre des revendications, selon lequel le caisson est façonné en pliant un moulage essentiellement plat venu de matière thermoplastique, **caractérisé en ce que** le moulage creux (2) est obtenu sous forme de moulage soufflé, la matière plastique dont le moulage creux est fait étant extrudée par une buse annulaire (10) pour former un conduit flexible (11) qui est immédiatement gonflé à l'air comprimé selon les cotes du produit fini et en ce que le flexible gonflé est alors formé par exemple par compression entre deux cylindres (14) pour obtenir un élément plat et creux (13), éventuellement transporté entre deux matrices (15,16) conçues pour assurer la forme recherchée du moulage creux et pour couper la matière résiduelle qui entoure les bords du moulage creux après en avoir rejoint la forme finale.
